# EUROPEAN PATENT APPLICATION

(11) **EP 3 910 205 A1**
(43) Date of publication of application: **17.11.2021**
(21) Application number: 21172886.0
(22) Date of filing: 07.05.2021
(51) Int. Cl.: F16B 13/00

(54) **WALL FIXING**

(30) Priority: 13.05.2020 GB 202007020
(71) Applicant: Metex Online Ltd, Anglesey LL60 6DN (GB)
(72) Inventor: Bamford, Daniel Caspar, Gaerwen, LL60 6DN (GB)
(74) Representative: Hamilton, Alistair

(57) **Abstract**

A fixing for securing an object to a dot-and-dab wall is disclosed. The fixing comprises a body (10) that extends along an axis (A) between a closed end and an open end. The body (10) has an outer surface (12) that is cylindrical and centred upon the axis (L). An external helical thread (14) that project from the outer surface (12) and extends part-way along its axial length, there being a first unthreaded length of the outer surface adjacent to the open end. A bore (26) extends axially into the body (10) from the open end. An outer length (30) of the bore (26) has a shape (e.g., hexagonal) adapted for cooperation with a rotational drive tool. An inner length (32) of the bore is formed with an internal thread. An annular bearing surface (28) surrounds the bore (26). The thread (14) typically completes between seven and twelve turns about the outer surface (12).

## Description

This invention relates to wall fixings. It has particular, but not exclusive, application to a fixing for securing an item to a wall constructed using an outer layer, typically of plasterboard, secured to a substrate solid wall construction, sometimes known as a "dot-and-dab", "dry lined" or multiple substrate wall.

Fixing an item to a dot-and-dab wall is a more challenging task than fixing into a solid wall. The outer surface of the wall is formed from sheets of material such as plasterboard, and while fixings specifically adapted for securing to plasterboard are available, the plasterboard itself is of limited strength so is not capable of carrying heavy loads. Therefore, where a heavy load is to be secured to a dot-and-dab wall, a fixing must be used that can extend through the plasterboard to anchor within the underlying substrate, which is typically of a more substantial construction such as concrete blockwork. An example of such a fixing is disclosed in UK Patent No. 2 562 446 of the present applicant

In some cases, conventional fixings for dot-and-dab walls may not be long enough to anchor within the substrate. This is particularly the case for walls in which the plasterboard is insulated. An aim of this invention is to provide a wall fixing that enables heavy items to be secured to a dot-and-dab wall with greater versatility than is possible with known fixings. Although the outer layer is most typically formed from plasterboard, other materials may be used, such as wood, fibreboard or plasterboard bonded to insulation, in each case, there being a space between that outer layer and the substrate, which may optionally be filled with insulating material.

To this end, from a first aspect, this invention provides a fixing for securing an object to a dot-and-dab wall, the fixing comprising a body that extends along an axis between a closed end and an open end, the body having:
a. an outer surface that is cylindrical and centred upon the axis;
b. an external helical thread that projects from the outer surface and extends part-way along its axial length, there being a first unthreaded length of the outer surface adjacent to the open end;
c. a bore extending axially into the body from the open end, an outer keyed portion of the bore having a shape adapted for cooperation with a rotational drive tool, and an inner threaded portion of the bore being formed with an internal thread, there being an annular bearing surface surrounding the bore.

A fixing embodying the invention can be driven into a hole formed in a dot-and-dab wall. A fixing may be chosen that is dimensioned such that the external thread engages only with a substrate of the wall and not with an outer layer of the wall. This ensures that the relatively weak outer layer is not loaded by the fixing.

The keyed portion of the bore may have a polygonal and most typically hexagonal cross-section, or any other configuration suitable for connection with a drive tool. This allows the fixing to be rotated axially using a commonly-available hex key.

The outer surface may have a second unthreaded length adjacent to the closed end. Preferably, a lead-in formation such as a chamfer interconnects the cylindrical outer surface and the second unthreaded length of the outer surface.

In typical embodiments, the external thread completes at least six turns about the outer surface. More typically, it may complete between seven and twelve turns about the outer surface. Alternative embodiments may be of greater length and have a thread that completes 20 turns about the outer diameter.

In a typical embodiment, the axial length of the fixing is in the range of seven to twelve times the diameter of the outer surface. The thread may have a pitch that is 75% to 80% (e.g., approximately 80%) of the diameter of the cylindrical outer surface on which it is formed. The thread may have a wide root that is approximately 70% to 80% (e.g., 75%) of the pitch. The thread may have an external diameter that is approximately 130%-150% (e.g., 145%) of the diameter of the cylindrical outer on which it is formed.

From a second aspect, this invention provides an installation on a dot-and-dab wall, which wall comprises:
a substrate and an outer layer secured to and spaced from the substrate,
the installation comprising a fixing embodying the first aspect of the invention located in a hole formed through the outer layer into the substrate, wherein:
   part of the external thread is in threaded engagement with the material of the substrate; and
   the outer layer lies radially outwardly from the second unthreaded length of the outer surface, whereby the external thread is not in engagement with the outer layer.

Most preferably, the open end of the fixing is substantially coincident with an outer surface of the wall.

An installation typically further includes a connected item and a fastener, which fastener is in threaded engagement with the internal thread to secure the connected item to the fixing. The connected item is preferably clamped to a bearing surface of the fixing by the fastener, to ensure that loads from the connected item are transferred to the fixing and not to the outer layer. The connected item may be a connector (such as a bracket) upon which a structure (such as a shelf or item of wall-mounted furniture) can be supported. Typically, the fastener is a machine screw or a cap screw.

From a third aspect, this invention provides a method of forming an installation embodying the second aspect of the invention on a dot-and-dab wall comprising:
a. forming a hole in the wall that extends through the outer layer into the substrate;
b. inserting the fixing into the hole and causing the fixing to rotate axially whereby it is drawn into the hole by the external thread until a bearing surface of the fixing is flush with an outer surface of the wall; and
c. connecting an item to the fixing by inserting a fastener into the threaded portion of the bore of the fixing and tightening the fastener to clamp the item against a bearing surface of the fixing.

Step b. is typically performed, at least in part, by inserting a tool into the keyed portion of the fixing and tightening and using the tool to rotate the fixing.

Embodiments of the invention will now be described, by way of example, and with reference to the accompanying drawings, in which:

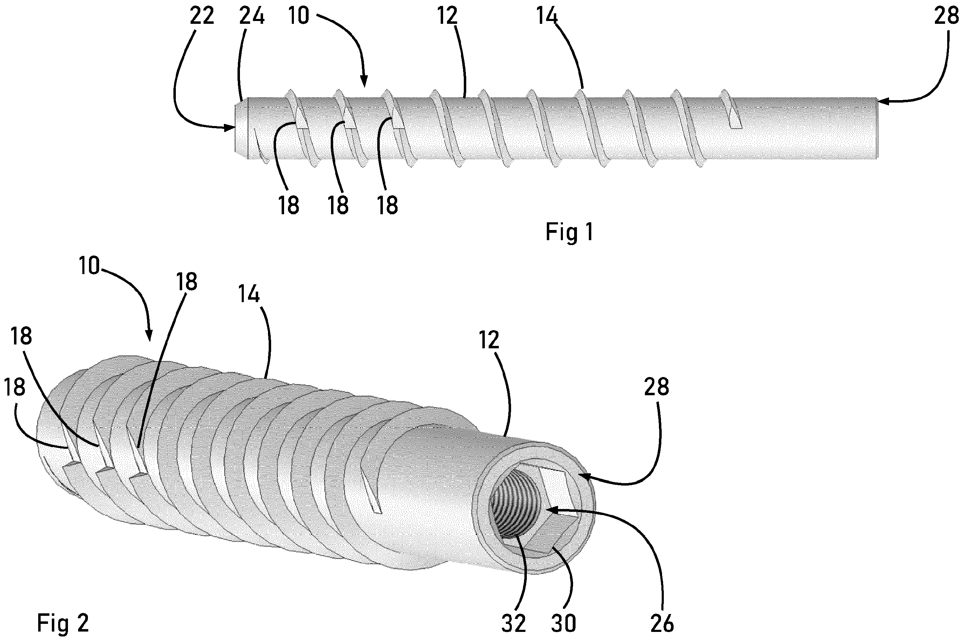

Figures 1 and 2 show a wall fixing embodying the invention;

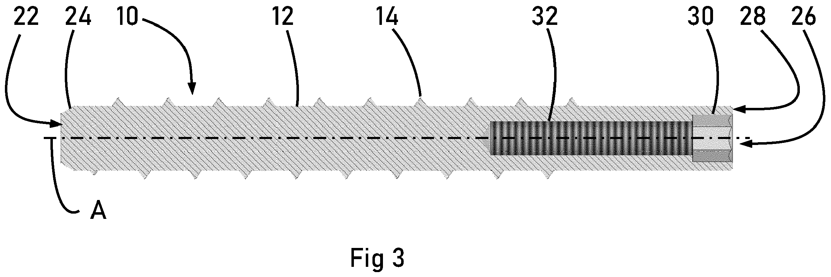

Figure 3 is a cross-sectional view of the embodiment of Figures 1 and 2;
Figures 4a to 4d together form a dimensioned first-angle projection drawing of a second embodiment of the invention;
Figures 5 and 6 are cross-sectional views of an installation using wall fixings embodying the invention installed in a dot-and-dab wall.

With reference to the drawings, a wall fixing 10 embodying the invention is formed in one-piece and is approximately cylindrical, having a central elongate axis A.

The wall fixing has a cylindrical outer surface 12 centred on the axis, upon which an external helical screw thread 14 of approximately triangular cross-section is formed. The thread is coarse, with a pitch that is approximately 80% of the diameter of the cylindrical outer surface 12 on which it is formed and wide root that is approximately 75% of the pitch. The external diameter of the thread is approximately 145% of the diameter of the cylindrical outer surface 12.

The wall fixing 10 has a closed end that has an end wall 22 that extends perpendicularly to the axis A and is connected to the outer surface 12 by a chamfer 24. Opposite to the closed end, the wall fixing has an open end, there being an axial bore 26 extending into the wall fixing 10 for approximately one-third of its length, an annular bearing surface 28 being formed around the bore 26 in a plane normal to the axis A. An end portion of the bore 26 closest to the open end, referred to as the "keyed portion" 30 has a hexagonal cross section. The remainder of the axial bore 26, referred to as the "threaded portion" 32 is internally threaded and of lesser diameter than the keyed portion 30. The thread 14 does not extend along the axial length of the outer surface; there is a plain length of the outer surface 12 extending from the open end that is cylindrical and carries no thread and a short length next to the chamfer 24, in this embodiment, that carries no thread. The thread, in this embodiment, has ten turns.

Towards the end wall 22 of the fixing, the thread 14 reduces in diameter over approximately half a turn to the diameter of the outer surface 12 to form a thread lead. Close to the end wall 22, several notches 18 are formed in the thread 14. Each notch 18 is formed as a sloping cut in the thread 14, which gradually reduces its diameter extending along the thread in a direction towards the open end. This embodiment has three notches 18 spaced one turn apart along the thread 14.

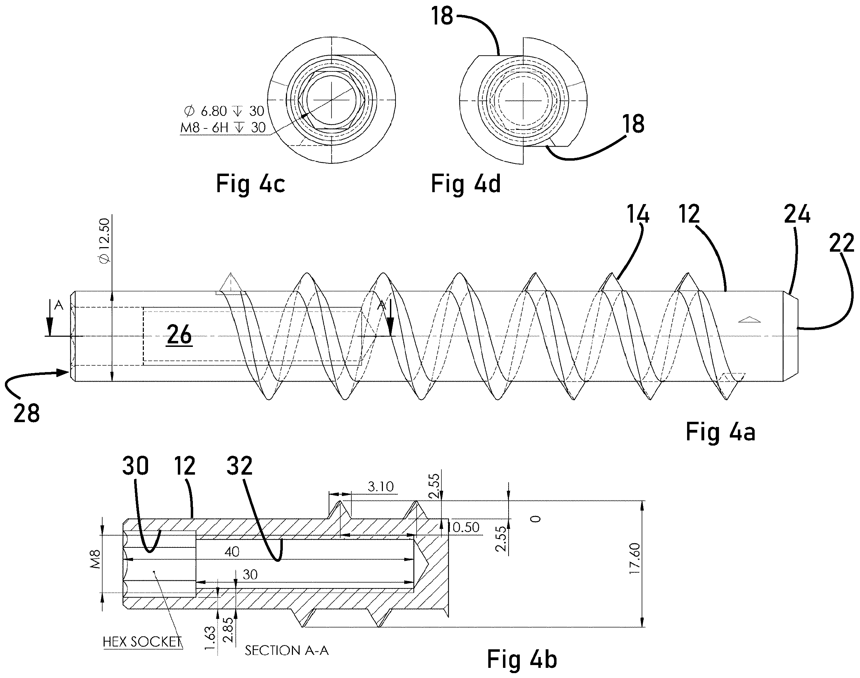

The detailed specifications of a second embodiment are set out in Figures 4a to 4d, all dimensions being given in mm and by way of a specific example only. The second embodiment is fundamentally the same as the first; the second wall fixing 10' is of similar length to the first, but it is greater diameter differ in diameter and therefore in load-carrying capacity. The thread 14' of the second fixing is coarser, having a larger pitch and greater depth as compared with that of the first fixing and has a total of seven turns. A coarser thread with fewer, deeper threads can be a more effective anchor into softer materials such as aerated lightweight concrete blocks.

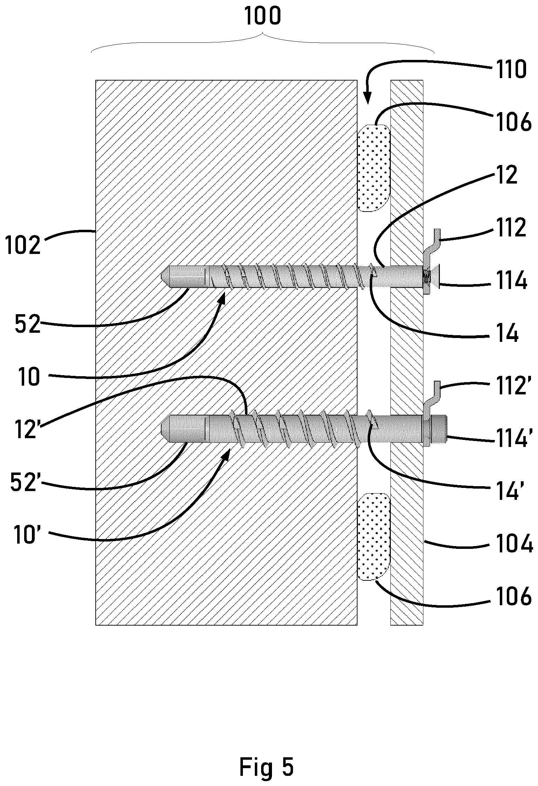

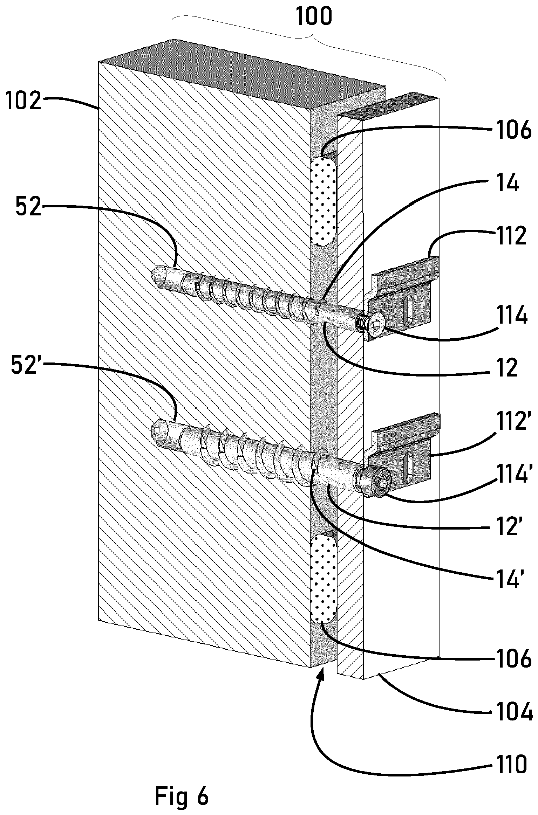

Figures 5 and 6 show the first and second embodiment wall fixings 10, 10', installed in a dot-and-dab wall 100 to support an object The wall 100 includes a structural substrate 102, which is typically formed from bricks; dense, thermal or lightweight cement blocks; cast concrete; concrete blocks or other solid masonry building components. The wall 100 further includes an outer layer 104 connected to and spaced from the substrate 102 by bodies of adhesive 106 that maintain an air gap 110 (which is optionally filled with insulating material) between the substrate 102 and outer layer 104. The outer layer is typically formed from plasterboard, or other material chosen to present a decorative outer surface of the wall 100 or to carry a decorative outer surface formed by a medium, such as plaster or polymeric material, fixed to the outer layer.

Where an object is to be secured to a dot-and-dab wall 100 using a fixing 10, 10' embodying the invention, first a hole 52, 52' is drilled into the wall, the hole passing through the outer layer 104 and extending into the substrate 102 to a depth that allows installation of the fixing 10, 10' with some clearance, as will be described below. The diameter of the hole 52, 52' is formed with a diameter that permits the outer surface 12, 12' of the associated fixing 10, 10' to enter the hole as a close, sliding fit

The chamfer 24 is then used to guide the closed end into the hole 50. The fixing 10, 10' is then rotated about its axis A to cause the lead of its thread 14, 14' to engage with the material of the outer layer 104 and draw the fixing 10, 10' towards the substrate 102. A suitable tool, such as a hexagonal key or a power tool, is inserted into the keyed portion 30 of the bore 26 whereby an increased torque can be applied to the fixing 10,10'. Continued rotation of the fixing 10, 10' causes the thread 14 to tap a complementary internal thread in the hole 52, 52', to draw the fixing 10, 10' into the hole 52, 52' until the bearing surface 28 is substantially flush with the outer layer 104. The notches 18 formed in the thread 14 act as cutting surfaces to assist in formation of the tapped thread. When in this position, the end wall 22 has clearance from the end of the hole sufficient to allow any waste material arising from formation of the hole 52, 52' to be accommodated.

A connected item, in this case a bracket 112, 112', can then be secured to the fixing 10, 10' by a threaded fastener 114, 114', such as a machine screw or a cap screw, that passes through the bracket 112, 112' into threaded engagement with the threaded portion 32 of the axial bore 26. (Many alternative forms of fastener may be used, the main requirement being that it has a thread that is compatible with that of the fixing.) Tightening the fastener 114,114' clamps the bracket 112, 112' against the bearing surface 28 of the fixing.

Several points concerning the design and operation of a fixing embodying the invention should be noted.

It is most important that the outer layer 104 of the wall 100 plays minimal part in the effectiveness of the fixing 10, 10'. Two main features of an installation using the fixing achieve this.

First, the item connected to the fixing 10, 10' is clamped against the end surface of the fixing 10, 10', not against the outer layer 104. The depth to which the fixing 10, 10' is driven into the wall is chosen such that there is either a slight clearance between the item and the outer layer 104 of that the item applies a light contact force to the outer, as is preferred for a particular application. Second, vertical loading applied to the item connected to the fixing is not or is only minimally transferred to the outer layer 104. Instead, the load is transferred the portion of the fixing 10, 10' that is within the substrate 102, with the load being cantilevered from that portion of the fixing.

To achieve these two aims, a specific fixing embodying the invention is selected for a specific installation based upon relevant dimensions of the wall 100 and of the loading that the fixing is intended to support Several of these will now be discussed.

The plain length of the outer surface 12 is sufficient that when installed in the hole, that portion of the fixing 10, 10', the thread is not engaged with the outer layer 104 - it ends either within the substrate 102 or the air gap 110. This later arrangement can be clearly seen in Figure 5.

The hole is the outer layer 104 is of sufficient diameter that the fixing does not bear against it Optionally, the plain length of the fixing may be of lesser diameter to ensure that this requirement is met

The fixing 10, 10' does not have a head, flange or other formation at the open end. This allows the fixing to remain mechanically uncoupled from the outer layer 104. (Other embodiments may include a small flange or taper to increase the area of the bearing surface and/or for aesthetic considerations.)

The overall length of the fixing and its diameter are selected in dependence upon the load that the fixing is intended to support. An increase in length results in an increase in the length of the thread that is in engagement with the material of the substrate. An increase in diameter, also increases the length of the thread that is in engagement with the material of the substrate and in addition increases the bending stiffness of the fastener.

The load that a fixing is intended to carry may also determine the material from which it is made. It may be formed from metal (typically cast from steel) or may be formed from a polymer such as polyamide 6. Likewise, the fastener may be formed from metal (such as steel) or a polymer such as polyamide 6.

## Claims

1. A fixing for securing an object to a dot-and-dab wall, the fixing (10) comprising a body that extends along an axis (A) between a closed end and an open end, the body having:
a. an outer surface (12) that is cylindrical and centred upon the axis (A);
b. an external helical thread (14) that projects from the outer surface (12) and extends part-way along its axial length, there being a first unthreaded length of the outer surface adjacent to the open end;
c. a bore (26) extending axially into the body (12) from the open end, an outer length of the bore having a keyed portion (30) that has a shape adapted for cooperation with a rotational drive tool, and an inner length (32) of the bore (26) being formed with an internal thread, there being an annular bearing surface (28) surrounding the bore; wherein
d. the outer surface (12) has a second unthreaded length adjacent to the closed end.

2. A fixing according to claim 1 in which the keyed portion (30) of the bore (26) has a hexagonal cross-section.

3. A fixing according to claim 1 or claim 2 in which a chamfer (24) interconnects the cylindrical outer surface (12) and the second unthreaded length of the outer surface.

4. A fixing according to any preceding claim in which the external thread (14) completes between seven and twelve turns about the outer surface (12) or up to 20 turns about the outer surface (12).

5. A fixing according to any preceding claim in which the axial length of the fixing is in the range of seven to twelve times the diameter of the outer surface (12).

6. A fixing according to any preceding claim in which the thread (14) has a pitch that is approximately 80% of the diameter of the cylindrical outer surface on which it is formed.

7. A fixing according to any preceding claim in which the thread (14) has a root that is approximately 75% of the pitch.

8. A fixing according to any preceding claim in which the thread (14) has an external diameter that is approximately 145% of the diameter of the cylindrical outer surface (12) on which it is formed.

9. An installation on a dot-and-dab wall (100), which wall comprises:
a substrate (102) and an outer layer (104) secured to and spaced from the substrate,
the installation comprising a fixing (10) according to any preceding claim located in a hole formed through the outer layer (104) into the substrate (102), wherein:
part of the external thread (14) is in threaded engagement with the material of the substrate (102); and
the outer layer (104) lies radially outwardly from to the second unthreaded length of the outer surface, whereby the external thread is not in engagement with the outer layer (104).

10. An installation according to claim 9 in which and the open end of the fixing is substantially coincident with an outer surface of the wall (100).

11. An installation according to claim 9 or claim 10 further including a connected item (112) and a fastener (114), which fastener is in threaded engagement with the internal thread (32) to secure the connected item (112) to the fixing (10).

12. An installation according to claim 11 in which the connected item (112) is clamped to the bearing surface (28) of the fixing by the fastener.

13. An installation according to claim 11 or claim 12 in which the connected item is a connector upon which a structure can be supported.

14. A method of forming an installation according to any one of claims 9 to 13 on a dot-and-dab wall (100) comprising:
a. forming a hole (52) in the wall that extends through the outer layer (104) into the substrate (102);
b. inserting the fixing (10) into the hole (52) and causing the fixing to rotate axially whereby it is drawn into the hole (52) by the external thread (14) until a bearing surface (28) of the fixing is flush with an outer surface of the wall; and
c. connecting an item (112) to the fixing by inserting a fastener (114) into the threaded portion (32) of the bore of the fixing and tightening the fastener to clamp the item against a bearing surface of the fixing.

15. A method according to claim 18 in which step b. is performed, at least in part, by inserting a tool into the keyed portion (30) of the fixing and tightening and using the tool to rotate the fixing (10).
